# EUROPEAN PATENT SPECIFICATION

(11) **EP 3 099 476 B1**
(45) Date of publication and mention of the grant of the patent: **09.01.2019**
(21) Application number: 15703044.6
(22) Date of filing: 30.01.2015
(51) Int. Cl.: B29D 30/06, B29D 30/72

(54) **TYRE MOULD WITH A PLATE FOR MOULDING INFORMATION ON A SIDEWALL**
REIFENFORM MIT EINER FORMPLATTE ZUM FORMEN VON INFORMATIONEN AUF EINER SEITENWAND
MOULE POUR PNEU AVEC UNE PLAQUE POUR MOULER DES INFORMATIONS SUR LE FLANC DU PNEU

(30) Priority: 31.01.2014 FR 1450771
(43) Date of publication of application: 07.12.2016
(73) Proprietor: Compagnie Générale des Etablissements Michelin, 63000 Clermont-Ferrand (FR)
(72) Inventor: PANIC, Sinisa, F-63040 Clermont-Ferrand Cedex 9 (FR)
(74) Representative: Demaure, Pierre-Yves
(86) International application number: PCT/EP2015/051940
(87) International publication number: WO 2015/114097

(56) References cited:
- WO-A1-2009/007790
- JP-A- H11 333 844
- US-A- 2 679 663
- US-A- 4 547 139
- US-A1- 2004 032 053
- US-B1- 6 315 539
- US-B1- 7 883 326

## Description

### FIELD OF THE INVENTION

The present invention relates to moulds for manufacturing new tyres and moulds for retreading tyres. More particularly, the invention relates to a mould comprising a plate for moulding information onto a tire sidewall.

### PRIOR ART

Such plates are inserts for a mould side wall ring that are used to mould information onto a tire sidewall, for example, tire brand information or a bar code for inventory identification. A mould side wall ring may be used over a relatively long period of time, and form, by moulding, different versions of a single tire model. The removable plates are changed when the information on the plate need to be changed for different tire moulding requirements.

In conventional moulds, plates are held in place in a mould by magnets, by screws fastened from the front of the plate, or by screws fastening the plates from the back of the side wall ring. In the case of magnets, when the mould is heated, the side wall ring and plate expand, which provides friction to help hold the plate in place.

The conventional means of holding plates inside wall rings present drawbacks. In moulds in which the plates are fastened with front attaching screws, the screw heads leave a mark on the moulded tire. When the screws are fastened from the back of the plate, the mould must be first removed from the press to gain access to the screws. Once the plate is changed, the mould must be reinstalled and realigned in the press, which involves time and effort. The magnet fastened plates must be allowed to cool before they can be removed, which causes delay and additionally are difficult to grasp for removal because of the lack of an edge or grip on the surface of the plate.

Document WO11/048131 discloses a complex tyre mould comprising a shell for moulding a sidewall of the tyre, a plurality of sectors for moulding a tread band of the tyre and a plurality of movable rings designed to move the sectors closer to the shell when the mould is closing.

US 6 315 539 B1 discloses a tyre mould according to the preamble of claim 1.

There is a need to optimize the time required to change a plate in a mould, such as complex tyre mould.

### DEFINITIONS

A "mould" means a collection of separate moulding elements which, when brought closer towards one another, delimit a toroidal moulding space.

"Tyre" is understood as any type of elastic tyre whether it is subjected to an internal pressure or not.

"Tread band " of a tyre is understood as a quantity of rubber material defined by lateral surfaces and by two principal surfaces, one thereof being designed to come into contact with a road surface when the tyre is travelling.

"Side of the tread band" is understood as the place in the pneumatic tyre where a transition of the tread band with a side of the pneumatic tyre occurs.

### SUMMARY OF THE INVENTION

The invention concerns a mould for moulding a tyre. The mould comprises a shell for moulding a sidewall of the tyre, a plurality of sectors for moulding a tread band of the tyre, and at least one movable ring designed to move the sectors closer to the shell when the mould is closing. Indeed, the mould comprises a plate for moulding information onto the tire sidewall and locking means for locking the plate into the shell. The locking means comprise a groove in the shell designed to receive the plate, a pin for blocking the plate in the groove, a first channel and a second channel extending respectively inside a sector and into a movable ring. The first channel and the second channel form a first way for inserting a tool in the mould, this tool being able to act on the pin for blocking the plate in the groove.

Indeed, the mould comprises unlocking means for unlocking the plate.

The unlocking means comprises a third channel, a fourth channel, and a fifth channel extending respectively inside the shell, the sector and the movable ring, the third channel, the fourth channel and the fifth channel forming a second way for inserting a rod in the mould, the rod being able to act on the plate for releasing this plate outside the groove.

Thus, the invention provides, in the same time, a mould in which the plate can be quickly and easily lock into this mould and a mould in which the plate can be quickly and easily removing from this mould.

In a variant, the rod has a bevelled edge to act on the plate.

Thus, the removing of the plate outside the groove is improved.

In a variant, the plate is pressed inside the groove, this plate having a section S, the width W of this section S decreasing in the depth of the groove.

The removing of the plate outside the groove is more improved.

Another object of the invention concerns a process for locking a plate into a shell of a tyre mould. The shell is able to mould a sidewall of the tyre and the plate is able to mould information onto the tire sidewall. The mould comprises a plurality of sectors for moulding a tread band of the tyre and a plurality of movable rings designed to move the sectors closer to the shell when the mould is closing. The process comprises a step of inserting a tool in a first way extending into the mould, this first way comprising a first channel extending inside a sector and a second channel extending inside a movable ring. Indeed, the process comprises, by using the tool, a step of acting on a pin for blocking the plate into a groove, this groove belonging to the shell.

In a variant, the tool is inserted in the mould when this mould is open.

With the mould in an opening state, it is possible to lock the plate into the shell and in the same time to verify the good position of this plate inside the shell during this operation of locking.

Another object of the invention concerns a process for unlocking a plate from a shell of a tyre mould. The shell is able to mould a sidewall of the tire and the plate is able to mould information onto the tyre sidewall. The mould comprises a plurality of sectors for moulding a tread band of the tyre and a plurality of movable rings designed to move the sectors closer to the shell when the mould is closing. The process comprises a step of inserting a rod in a second way extending in the mould, this second way comprising a third channel, a fourth channel and a fifth channel extending respectively inside the shell, a sector, and a movable ring. Indeed the process comprises, by using the rod, a step of acting on the plate for releasing this plate outside a groove, this groove belonging to the shell.

In a variant, the rod is inserted in the mould when this mould is open.

With the mould in an open state, it is possible to retrieve the plate in a safe manner, i.e. without the risk of impact between the plate and other parts of the mould. Indeed, a new plate can be inserted inside the shell just after releasing an old one. Thus, we can gain some times during the operation of changing a plate.

### BRIEF DESCRIPTION OF THE DRAWINGS

Other features and advantages of the invention will emerge from the following description, given by way of nonlimiting example, with reference to the attached drawings in which:
- **Figure 1** shows a partial section view of a mould according to the invention;
- **Figure 2** shows a partial section view of the mould according to a second embodiment of the invention;
- **Figure 3** schematically depicts a rod able to be inserted in the mould of the **figure 2****;**
- **Figure 4** schematically depicts a plate used in a mould according to **figure 1** and **figure 2****.**

In the description that follows, elements that are substantially identical or similar will be denoted by identical references.

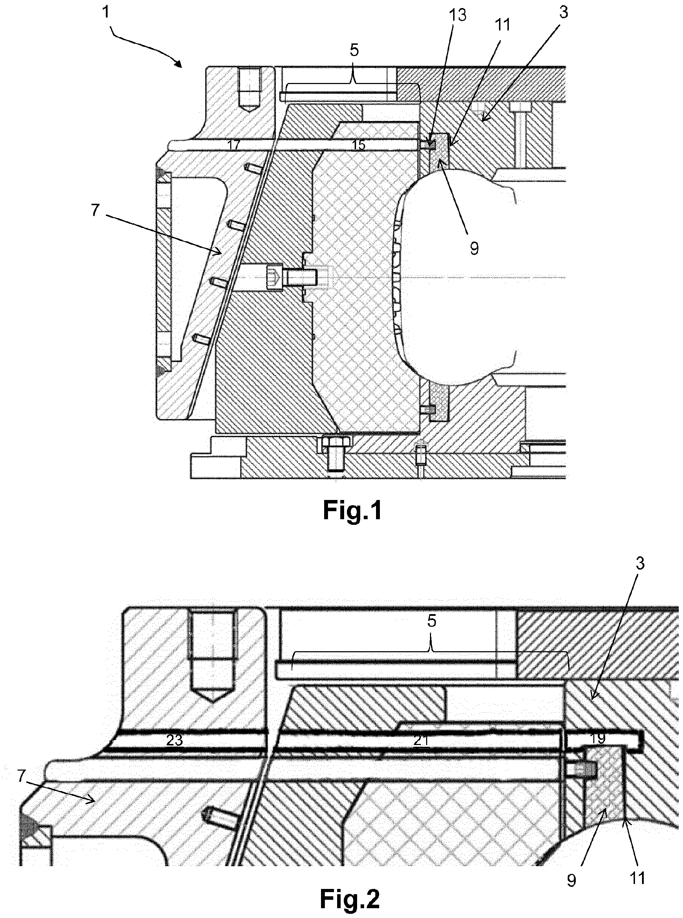

**Figure 1** shows a partial section view of a mould 1 according to the invention. The mould 1 comprises a shell 3 for moulding a sidewall of a tyre. This shell 3 is, here, linked to an upper part of a vulcanizing press (not shown) which controls the movement of the shell. In addition, the mould 1 comprises a plurality of sectors 5 for moulding a tread band of the tyre. Each sector has, here, a body and some moulding elements relying on this body. The body and the moulding elements form a sector. Besides, the mould 1 comprises at least one movable ring 7 designed to move the sectors 5 closer to the shell when the mould is closing. In order to mould information onto the tire sidewall, a plate 9 is inserted in the shell 3. This plate is held in place by locking means. These locking means comprises a groove 11 in the shell 3 designed to receive the plate 9. Indeed, the locking means comprises a pin 13 for blocking the plate 9 in the groove 11. This pin 13 is, for example, a screw. The plate has, here, a hole which permits the reception of the pin. We notice that the width of the plate is relatively low, around 6 mm. The pin 13 is actionable by a tool (not shown). This tool is inserted in the mould to act on the pin via a first way. This first way is formed by a first channel 15 extending inside the sector 5 and by a second channel 17 extending inside a movable ring 7. The first channel 15 and the second channel 17 are in a line for forming the way when the mould is close, i.e. when the mould delimits a toroidal moulding space. Thus, the first way extends globally along a radial direction. In a variant, the first channel 15 and the second channel 17 form the way for the tool when the mould is open.

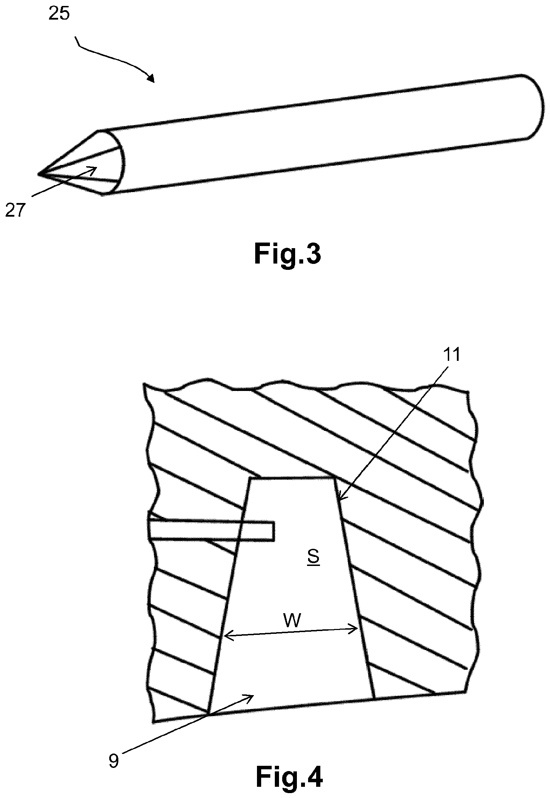

**Figure 2** shows a mould according to a second embodiment of the invention. In this embodiment, the mould comprises a second way for inserting a rod 25 to unlock the plate 9. This second way is globally parallel to the first way. The second way comprises a third channel 19 extending inside the shell 3, a fourth channel 21 extending inside the sector 5 and a fifth channel 23 extending inside the movable ring 7. The second way extends above the plate 9, when this plate is inserted inside the shell. Thus, the rod 25 can push the plate 9 outside the groove 11 when this rod is in the second way. In order to improve the removing of the plate outside the groove, rod 25 has a bevelled edge 27 as shown in **figure 3****.**

Indeed, the third channel 19, the fourth channel 21 and the fifth channel 23 are in a line for forming the second way, **figure 2**, when the mould is close. In a variant, the third channel 19, the fourth channel 21 and the fifth channel 23 form the way for the rod 25 when the mould is open.

**Figure 4** describes the plate 9 pressed inside the groove 11. The plate 9 having a section S, the width W of this section S is decreasing in the depth of the groove 11.

The invention is not restricted to the examples described and depicted and various modifications can be made thereto without departing from its scope.

## Claims

1. Tyre mould comprising a shell (3) for moulding a sidewall of the tyre, a plurality of sectors (5) for moulding a tread band of the tyre, and at least one movable ring (7) designed to move the sectors (5) closer to the shell (3) when the mould is closing, the mould comprising a plate (9) for moulding information onto the tire sidewall and locking means (11, 13, 15, 17) for locking the plate (9) into the shell (3), the locking means comprising:
- a groove (11) in the shell (3) designed to receive the plate (9);
- a pin (13) for blocking the plate (9) in the groove (11); and
- a first channel (15) and a second channel (17) extending respectively inside a sector (5) and inside a movable ring (7), the first channel (15) and the second channel (17) forming a first way for inserting a tool in the mould, the tool being able to act on the pin (13) for blocking the plate (9) in the groove (11),
**characterized in that** the mould comprises unlocking means for unlocking the plate, the unlocking means comprising :
- a third channel (19), a fourth channel (21), and a fifth channel (23) extending respectively inside the shell (3), the sector (5) and the movable ring (7), the third channel (19), the fourth channel (21) and the fifth channel (23) forming a second way for inserting a rod in the mould, the rod being able to act on the plate (9) for releasing this plate outside the groove (11) .

2. Mould according to claim 1, **characterized in that** the rod (25) has a bevelled edge (27) to act on the plate.

3. Mould according to any one of claims 1 to 2, the plate (9) is pressed inside the groove (11), this plate (9) having a section S, the width W of this section S decreasing in the depth of the groove (11).

4. Mold according to any one of claims 1 to 3, the plate (9) having a thickness of at least 6 mm.

5. Mold according to any one of claims 1 to 4, the tool able to act on the pin (13) is selected among the following list of devices :
- a rod with bevel;
- an hydraulic actuator;
- a rod with a cam on the end;
- a screw that moves a wedge.

6. Process for unlocking a plate (9) from a shell (3) of a tyre mould (1), said shell (3) being able to mould a sidewall of the tire and said plate being able to mould information onto the tyre sidewall, the mould comprising a plurality of sectors for moulding a tread band of the tyre and a plurality of movable rings (7) designed to move the sectors (5) closer to the shell (3) when the mould is closing, the process comprising the following steps :
- a step of inserting a rod in a second way extending into the mould, this second way comprising a third channel (19), a fourth channel (21) and a fifth channel (23) extending respectively inside the shell (3), a sector (5), and a movable ring (7);
- by using the rod, a step of acting on the plate (9) for releasing this plate outside a groove (11), this groove belonging to the shell (3).

7. Process according to claim 6, **characterized in that** the rod (25) is inserted in the mould (1) when this mould is open.

## Patentansprüche

1. Reifenform, umfassend eine Schale (3) zum Formen einer Seitenwand des Reifens, eine Vielzahl von Sektoren (5) zum Formen einer Lauffläche des Reifens, und mindestens einen entfernbaren Ring (7), der dazu ausgelegt ist, die Sektoren (5) dichter an die Schale (3) zu bewegen, wenn sich die Form schließt, wobei die Form eine Platte (9) zum Formen von Informationen auf der Reifenseitenwand und Verriegelungselemente (11, 13, 15, 17) zum Verriegeln der Platte (9) in der Schale (3) umfasst, wobei die Verriegelungselemente Folgendes umfassen:
- eine Nut (11) in der Schale (3), die dazu ausgelegt ist, die Platte (9) aufzunehmen;
- einen Stift (13) zum Blockieren der Platte (9) in der Nut (11); und
- einen ersten Kanal (15) und einen zweiten Kanal (17), die sich jeweils im Inneren eines Sektors (5) bzw. im Inneren eines bewegbaren Rings (7) erstrecken, wobei der erste Kanal (15) und der zweite Kanal (17) einen ersten Weg zum Einsetzen eines Werkzeugs in die Form ausbilden, wobei das Werkzeug in der Lage ist, auf den Stift (13) einzuwirken, um die Platte (9) in der Nut (11) zu blockieren, **dadurch gekennzeichnet, dass** die Form Entriegelungselemente zum Entriegeln der Platte umfasst, wobei die Entriegelungselemente Folgendes umfassen:
- einen dritten Kanal (19), einen vierten Kanal (21) und einen fünften Kanal (23), die sich jeweils im Inneren der Schale (3), des Sektors (5) bzw. des bewegbaren Rings (7) erstrecken, wobei der dritte Kanal (19), der vierte Kanal (21) und der fünfte Kanal (23) einen zweiten Weg zum Einsetzen einer Stange in die Form ausbilden, wobei die Stange in der Lage ist, auf die Platte (9) einzuwirken, um diese Platte außerhalb der Nut (11) freizugeben.

2. Form nach Anspruch 1, **dadurch gekennzeichnet, dass** die Stange (25) eine abgeschrägte Kante (27) aufweist, um auf die Platte einzuwirken.

3. Form nach einem der Ansprüche 1 bis 2, wobei die Platte (9) ins Innere der Nut (11) gedrückt wird, wobei diese Platte (9) eine Sektion S aufweist, wobei sich die Breite (Width, W) dieser Sektion S in der Tiefe der Nut (11) verringert.

4. Form nach einem der Ansprüche 1 bis 3, wobei die Platte (9) eine Dicke von mindestens 6 mm aufweist.

5. Form nach einem der Ansprüche 1 bis 4, wobei das Werkzeug, welches in der Lage ist, auf den Stift (13) einzuwirken, aus der folgenden Liste von Vorrichtungen ausgewählt wird:
- eine Stange mit Abschrägung;
- ein hydraulisches Betätigungsorgan;
- eine Stange mit einem Nocken an dem Ende;
- eine Schraube, die einen Keil bewegt.

6. Verfahren zum Entriegeln einer Platte (9) von einer Schale (3) einer Reifenform (1), wobei die Schale (3) in der Lage ist, eine Seitenwand des Reifens zu formen, und die Platte in der Lage ist, Informationen auf der Reifenseitenwand zu formen, wobei die Form eine Vielzahl von Sektoren zum Formen einer Lauffläche des Reifens und eine Vielzahl von entfernbaren Ringen (7) umfasst, die dazu ausgelegt sind, die Sektoren (5) dichter an die Schale (3) zu bewegen, wenn die Form geschlossen wird, wobei das Verfahren die folgenden Schritte umfasst:
- einen Schritt des Einsetzens einer Stange in einen zweiten Weg, der sich in die Form erstreckt, wobei dieser zweite Weg einen dritten Kanal (19), einen vierten Kanal (21) und einen fünften Kanal (23) umfasst, die sich jeweils innerhalb der Schale (3), eines Sektors (5) und eines bewegbaren Rings (7) erstrecken;
- unter Verwendung der Stange einen Schritt des Einwirkens auf die Platte (9), um diese Platte außerhalb einer Nut (11) freizugeben, wobei diese Nut zu der Schale (3) gehört.

7. Verfahren nach Anspruch 6, **dadurch gekennzeichnet, dass** die Stange (25) in die Form (1) eingesetzt wird, wenn diese Form offen ist.

## Revendications

1. Moule pour pneu comprenant une coquille (3) pour mouler le flanc du pneu, une pluralité de secteurs (5) pour mouler une bande de roulement du pneu et au moins un anneau mobile (7) conçu pour rapprocher les secteurs (5) de la coquille (3) quand le moule est en cours de fermeture, le moule comprenant une plaque (9) pour mouler des informations sur le flanc du pneu et des moyens de verrouillage (11, 13, 15, 17) pour verrouiller la plaque (9) dans la coquille (3),
les moyens de verrouillage comprenant :
- une rainure (11) dans la coquille (3) conçue pour recevoir la plaque (9) ;
- une goupille (13) pour bloquer la plaque (9) dans la rainure (11), et
- un premier canal (15) et un deuxième canal (17) s'étendant respectivement à l'intérieur d'un secteur (5) et à l'intérieur d'un anneau mobile (7), le premier canal (15) et le deuxième canal (17) constituant une première voie pour introduire un outil dans le moule, l'outil pouvant agir sur la goupille (13) pour bloquer la plaque (9) dans la rainure (11) **caractérisé en ce que** le moule comprend des moyens de déverrouillage pour déverrouiller la plaque, les moyens de déverrouillage comprenant :
- un troisième canal (19), un quatrième canal (21) et un cinquième canal (23) s'étendant à l'intérieur respectivement de la coquille (3), du secteur (5) et de l'anneau mobile (7), le troisième canal (19), le quatrième canal (21) et le cinquième canal (23) constituant une seconde voie pour introduire une tige dans le moule, la tige pouvant agir sur la plaque (9) pour libérer cette plaque hors de la rainure (11).

2. Moule selon la revendication 1, **caractérisé en ce que** la tige (25) comporte un bord biseauté (27) pour agir sur la plaque.

3. Moule selon l'une quelconque des revendications 1 à 2, la plaque (9) étant destinée à être enfoncée dans la rainure (11), cette plaque (9) a une section S et la largeur W de cette section S diminue dans la profondeur de la rainure (11).

4. Moule selon l'une quelconque des revendications 1 à 3, la plaque (9) ayant une épaisseur d'au moins 6 mm.

5. Moule selon l'une quelconque des revendications 1 à 4, l'outil pouvant agir sur la goupille (13) étant choisi parmi :
- une tige biseautée ;
- un actionneur hydraulique ;
- une tige avec une came à l'extrémité ;
- une vis déplaçant un coin.

6. Processus de déverrouillage d'une plaque (9) dans une coquille (3) d'un moule (1) pour pneu, ladite coquille (3) pouvant mouler le flanc du pneu et ladite plaque pouvant mouler des informations sur le flanc du pneu, le moule comprenant une pluralité de secteurs pour mouler une bande de roulement du pneu et une pluralité d'anneaux mobiles (7) conçus pour rapprocher les secteurs (5) de la coquille (3) quand le moule est en cours de fermeture, le processus comprenant les étapes consistant à :
- introduire une tige dans une seconde voie s'étendant dans le moule, cette seconde voie comprenant un troisième canal (19), un quatrième canal (21)et un cinquième canal (23) s'étendant respectivement à l'intérieur de la coquille (3), d'un secteur (5) et d'un anneau mobile (7) ;
- agir, au moyen de tige, sur la plaque (9) pour sortir cette plaque (9) d' rainure (11), cette rainure (11) faisant partie de la coquille (3).

7. Processus selon la revendication 6, **caractérisé en ce qu'**on introduit la tige dans le moule (1) quand ce moule est ouvert.
